# EUROPÄISCHE PATENTSCHRIFT

(11) **EP 0 755 770 B1**
(45) Veröffentlichungstag und Bekanntmachung des Hinweises auf die Patenterteilung: **26.01.2000**
(21) Anmeldenummer: 95119379.6
(22) Anmeldetag: 08.12.1995
(51) Int. Cl.: B29C 51/26, B29C 31/08

(54) **Verfahren zur Herstellung von Formteilen**
Method of making molded products
Procédé de fabrication de produits moulés

(30) Priorität: 28.07.1995 DE 19527691
(43) Veröffentlichungstag der Anmeldung: 29.01.1997
(73) Patentinhaber: REHAU AG + Co, 95111 Rehau (DE)
(72) Erfinder: Stein, Helmut, 95111 Rehau (DE)

(56) Entgegenhaltungen:
- EP-A- 0 268 199
- EP-A- 0 283 378
- WO-A-94/16980
- WO-A-95/01248
- DE-A- 2 138 112
- DE-A- 2 418 445
- DE-A- 3 103 584
- FR-A- 1 391 998

## Beschreibung

Die Erfindung betrifft ein Verfahren zur Herstellung von Formteilen aus thermoplastischen Platten oder Folien gemäß dem Oberbegriff des Patentanspruchs 1.

Aus dem Stand der Technik sind zum Thermoformen oder Tiefziehverfahren Hinweise im "Lexikon der Technik" Lueger, Band 9, Stichwort "Warmformen" und im "Kunststoff-Lexikon", herausgegeben von Dr. K.Steckert, 7.Auflage, Seite 550 ff zu benennen. Die dort beschriebene Methode des Tiefziehens von zuvor hergestellten Kunststoff-Bandabschnitten hat den zentralen Nachteil extremer Wanddicken-Unterschiede, die durch das Herstellungsverfahren bedingt sind. Ausgehend von den randseitigen Einspannbereichen wird das Kunststoff-Halbzeug über die Konturen des eigentlichen Formwerkzeugs gezogen, wobei der Querschnitt des Halbzeugs insbesondere über Erhöhungen oder in Tälern der Form mitunter extrem verringert wird. Um solche extremen Dünnstellen im ausgeformten Formteil zu vermeiden, müssen bei diesem Verfahrensvorgang Kunststoff-Halbzeuge mit verhältnismäßig hohen Wanddicken eingesetzt werden, was einen hohen Materialverbrauch und gleichzeitig erhöhte Kosten mit sich bringt. Weiterhin entstehen durch dieses Verfahren lange Zykluszeiten, da die dicken Materialabschnitte über die Eingabetemperatur hinaus in der Tiefziehmaschine noch auf die Umformtemperatur aufgeheizt werden müssen, bevor die eigentliche Verformung stattfinden kann.

Aus der DE 32 20 954 C2 ist ein Verfahren zum fortlaufenden Pressformen von dünnen Platten aus Kunststoff bekannt. Hierbei wird ein geschmolzener Kunststoff fortlaufend extrudiert und synchron mit dem Extruder zu einer Kunststoffbahn geformt. Die Kunststoffbahn wird danach in Abschnitte bestimmter Längen geschnitten und die noch temperierten Abschnitte werden schrittweise einer Pressformmaschine zugeführt.

Vor dieser Preßformmaschine werden die Abschnitte auf eine für das Preßformen notwendige Temperatur gebracht, anschließend werden sie in die Preßformmaschine transportiert und dort preßgeformt.

Bei diesem Verfahren werden sehr hohe Werkzeugkosten fällig, da für das Preßformverfahren jeweils eine voll ausgeformte Matrize und eine ebensolche Patrize erforderlich sind. Auch muß hier eine hydraulische Presse eingesetzt werden, über die neben der Preßkraft auch die entsprechende Verformungstemperatur auf das Halbzeug während des Verformungsvorganges aufgebracht wird, wodurch die Maschinenkosten erheblich ansteigen.

Ein weiteres gattungsgemäßes Verfahren zum Verformen von Platten aus thermoplastischem Kunststoff ist aus der DE-A-21 38 112 bekannt.
Hier wird ein Verfahren zur Herstellung eines strahlenförmigen Formlings mit in unterschiedlichen Ebenen verlaufenden Randbegrenzungen aus einer thermoplastischen Kunststoffplatte vorgestellt, bei dem der für die Herstellung des Formlings mit in unterschiedlichen Ebenen verlaufenden Randbegrenzungen notwendige Materialaufwand bei gleichzeitiger Verringerung der Verformungsarbeit herabgesetzt wird.

Dies soll dadurch erreicht werden, daß die ebene Kunststoffplatte in einen Rahmen eingespannt, mittels einer Heizvorrichtung auf die Verformungstemperatur erwärmt, eine Form dichtend gegen den Spannrahmen bewegt und anschließend die Platte mittels eines Formstempels vorgereckt und/oder mittels eines Vakuums oder Überdruckes der Form angepaßt wird. Die erwärmte Kunststoffplatte wird zusammen mit dem Spannrahmen durch Abknicken vorgeformt und den Randbegrenzungen der Form angepaßt. Bei diesem Abknick- bzw. Biegevorgang erfährt die neutrale Faser der Kunststoffplatte keinerlei Reckung, so daß die ursprüngliche Wandstärke der Kunststoffplatte erhalten bleibt.

Auch bei diesem Verfahren wird nachteilig gesehen, daß die Kosten für die voll ausgeformte Matrize und eine ebensolche Patrize sehr hoch sind. Weiterhin ist der Aufbau aus einem Abstützteil, einem Spannteil bildenden Rahmen, der Heizvorrichtung und einer Form mit Formstempel und/oder Vakuum bzw. Überdruckeinrichtung sehr kostenaufwendig, so daß die so geformten Teile nicht wirtschaftlich herstellbar sind.

Aus der DE-A-24 18 445 ist ein weiteres Verfahren zum schrittweise fortlaufenden Tiefziehen von in einem Spannrahmen gehaltenen und in diesem erwärmten Kunststoffolien bekannt. Mit diesem Verfahren soll eine Möglichkeit geschaffen werden, durch die auch solche Formschalen, die in der Mitte Vertiefungen haben oder konkav ausgebildet sind, in einem ähnlichen Verfahren mit einer Kunststoffolie durch eine besondere Vorrichtung hergestellt werden können, ohne daß es zu starkem Verzug und Dünnstellen im thermoplastischen Material kommt.
Dies soll dadurch erreicht werden, daß zum Abknicken nach unten einandergegenüberliegender Leisten des Spannrahmens, an in der Mitte tiefer als am Rand liegenden Stellen, abgestützt sind, ehe die Modellform nach oben in den Bereich der erwärmten Kunststofffolie gefahren wird. Gleichzeitig dazu werden die Enden der abknickbaren Leisten des Spannrahmens angehoben und im letzten Abschnitt des Anhebens ein Vakuum eingeschalten, das die Kunststoffolie vollständig an die Modellform ansaugt.

Nachteilig bei diesen sowie allen anderen Verfahren, in denen Spannrahmen verwendet werden, ist die Tatsache, daß die eingespannte Kunststoffplatte bzw. -folie in ihren Randbereichen nicht auf die gleiche Temperatur erwärmt werden kann wie im übrigen Bereich.

Da der Spannrahmen im allgemeinen aus einem metallischen Werkstoff hergestellt ist, geht ein Teil, der in die Kunststoffplatte bzw. -folie einzubringenden Wärme, hervorgerufen durch die gute Wärmeleitfähigkeit des Metalles, in den Spannrahmen hinein und führt dadurch zu Temperaturgradienten in der zu verformenden Kunststoffplatte bzw. -folie.

Aus diesem Grund wird der Spannrahmen während der Fertigung noch separat gekühlt, so daß dadurch die Wärmeabfuhr aus der zu verformenden Kunststoffplatte bzw. -folie noch erhöht wird.

Ein weiterer Nachteil dieses Verfahrens wird darin gesehen, daß nach der erfolgten Verformung der Kunststoffplatte bzw. -folie diese einem zweiten nachfolgenden Arbeitsgang zugeführt werden muß, bei dem die sich während des Verformens im Spannrahmen befindlichen Randbereiche der Kunststoffplatte bzw. -folie nachträglich entfernt werden müssen. Durch diesen zusätzlichen Arbeitsgang erhöhen sich zum einen die Investitionskosten für derartige Umformungsanlagen und zum zweiten werden die mit diesen Anlagen hergestellten Formteile teurer und unwirtschaftlich.

Aus der EP-A-0 283 378 ist ein weiteres Verfahren zum Herstellen von Artikeln aus synthetischen Werkstoffen mittels Druckgießens bekannt. Bei diesem Verfahren wird von einer Spule ein Band abgerollt, das durch ein Endlosband angetrieben wird und auf dem die zu bearbeitenden Rohlinge abgelegt werden. Diese werden nacheinander einem Gießformteil zugeführt, das mit einem komplementären Gießformteil zusammenwirkt. Hierbei wird der hergestellte, noch mit dem Band fest verbundene Artikel von einem Arm ergriffen, der mit einer Greifanordnung versehen ist, um einen Abschnitt des Bandes abzurollen und den Artikel bis zu einer Halterung zu befördern. So kann gleichzeitig ein neuer Rohling der Gießform zugeführt werden, während ein Messer das Band nach der Gießform abschneidet.

Bei diesem Verfahren erweist es sich als nachteilig, daß auch hier die Kosten für eine voll ausgeformte Matrize und eine ebensolche Patrize notwendig sind, wodurch die Wirtschaftlichkeit der hergestellten Produkte in Frage gestellt ist. Die Kosten für die zur Pressung erforderliche Maschine erhöhen sich demzufolge auch, so daß hier ein weiterer gravierender Nachteil dieses Verfahrens gesehen wird.

Aus der DE-A-31 03 584 ist ein Verfahren zum Formen von thermoplastischen Platten oder Folien bekannt. Mit Hilfe dieses Verfahrens ist es möglich, den Arbeitszyklus einer Thermoformmaschine zu verkürzen und die vorhandene Heizleistung besser zu nutzen, ohne daß ein erhöhter Aufwand für den Transport des zu verarbeitenden Materials erforderlich wäre. Hierzu wird vorgeschlagen, daß während der Verformung der einen Platte bzw. Folie die nachfolgende Platte bzw. Folie vorgeheizt und erst unmittelbar vor der Verformung in einer Formvorrichtung auf die Formtemperatur aufgeheizt wird. Der Vorteil wird darin gesehen, daß während des Formvorganges eine weitere Platte bzw. Folie bereits vorgeheizt wird, so daß die vorhandene Heizleistung auch während des Formvorganges genutzt wird. Dieses Vorheizen kann auch während des Transportes der zu verformenden Platte bzw. Folie erfolgen.

Nachteilig bei diesem Verfahren ist jedoch, daß die Heizvorrichtung während des Transportes der zu erwärmenden und zu verformenden Platte bzw. Folie mit in das Formwerkzeug hineinfahren muß, um es dort auf endgültige Formtemperatur zu bringen. Die zu verformende Platte bzw. Folie muß dabei sowohl von oben als auch von unten mit der Heizvorrichtung erwärmt werden.
Dadurch muß das Verformungswerkzeug in der Formstation sehr weit öffnen, so daß die Formstation erheblich größer und aufwendiger dimensioniert werden muß. Ein weiterer entscheidender Nachteil wird darin gesehen, daß bei dem in diesem Verfahren verwendeten Formwerkzeug ebenfalls eine voll ausgeformte Matrize und eine ebensolche Patrize erforderlich sind.

Dadurch erhöhen sich neben den Kosten für die Formstation auch die für das Verformungswerkzeug, so daß die Wirtschaftlichkeit der derart hergestellten Produkte in Frage gestellt werden muß.

Hier setzt die Erfindung ein, die es sich zur Aufgabe gestellt hat, die Nachteile des Standes der Technik zu vermeiden und ein Warmformverfahren von plattenartigen Kunststoff-Halbzeugen anzugeben, bei dem dünne Kunststoffplatten bzw. -folien eingesetzt werden können, und bei dem nur geringe Wanddickenunterschiede bei der Verformung entstehen, die bei einer späteren Benutzung der verformten Teile nicht negativ ins Gewicht fallen. Erfindungsgemäß werden dazu in Verbindung mit den Merkmalen des Oberbegriffs des Anspruchs 1 die nachfolgenden Verfahrensschritte vorgeschlagen:
- die temperaturerweichte Platte oder Folie wird über ein Förderelement in planer Erstreckung über ein höhenverstellbares und/oder schwenkbares Formwerkzeug gefördert;
- danach wird ein über das Förderelement hinausragendes freies Ende der temperaturerweichten Platte oder Folie durch ein Verriegelungselement auf dem freien Schenkel des Formwerkzeuges fixiert;
- die temperaturerweichte und so fixierte Platte oder Folie wird dann von dem Förderelement unter Beibehaltung der Förderbewegung bei kontinuierlich zurückfahrendem Förderelement abgegeben und auf dem Formwerkzeug abgelegt;
- das Formwerkzeug wird synchron dazu in einer überlagerten Hub- und Schwenkbewegung so bewegt, daß die temperaturerweichte Platte oder Folie bis zur Kontur des Formwerkzeuges geführt wird;
- die temperaturerweichte Platte oder Folie bedeckt dabei zunehmend und spannungsarm die Kontur des Formwerkzeuges;
- das Anlegen wird über Vakuum- und/oder Gasdruckkräfte unterstützt, die aus Öffnungen des Formwerkzeuges auf die temperaturerweichte Platte oder Folie einwirken.
- nach Abschluß des Formvorganges wird das Formteil abgekühlt und von dem Formwerkzeug abgenommen.
Zweckmäßige Weiter bildungen der Erfindung sind Gegenstand der abhängigen Ansprüche.

Die Vorteile dieses Verfahrens gegenüber dem bekannten Tiefziehverfahren liegen in den geringen Reckverhältnissen bei der Verformung der plattenförmigen Hölbzeuge, d.h. der Platte oder Folie. Hieraus leitet sich eine verhältnismäßig gleichmäßige Wanddicke des Endproduktes ab. Dadurch bedingt, können mit dem erfindungsgemäßen Verfahren vergleichsweise dünne, plattenförmige Halbzeuge verarbeitet werden, da extreme Wandverdünnungen durch große Reckungen nicht zu befürchten sind. Die Aufheizzeiten verkürzen sich. Der Materialverbrauch sinkt.

Bei der Förderung des temperaturerweichten Halbzeugs, d.h. der Platte oder Folie über das Formwerkzeug ist es unerheblich, ob die Gewichtskräfte des Halbzeugs durch eine Unterlage ähnlich einem Förderband, durch Aufspannen oder durch Aufliegen an seinem Rand, durch stützenden Gasdruck oder durch Anlegen von Vakuum aufgefangen werden. Bei der Annäherung und dem zunehmenden Anlegen des Halbzeugs an die Kontur des Formwerkzeugs können sowohl das Halbzeug als auch das Formwerkzeug oder beide bewegt werden, um diese Annäherung zu erreichen. Wird ein linear bewegtes Förderband zur Lieferung des Halbzeugs an das Formwerkzeug verwendet, so kann der Linearbewegung des Förderbandes eine Hub- und Schwenkbewegung des Formwerkzeugs überlagert sein.

In einer selbständigen Ausführungsvariante wird das temperaturerweichte Halbzeug in planer Erstreckung über eine Form mit einem höhenverstell- und/oder verschwenkbaren Formwerkzeug gefördert. Danach wird der Rand des Halbzeugs in eins Rahmen, der als Klapprahmen ausgebildet sein kann, fixiert. Dieser Klapprahmen verfügt über eine oder mehrere Klappachsen, wobei sich die Elemente des Klapprahmens um die Klappachsen bewegen und dabei das Halbzeug der Kontur des Formwerkzeugs annähert. Das Formwerkzeug kann dabei in einer überlagerten Hub- und/oder Schwenkbewegung so bewegt werden, daß das Halbzeug zunächst an einzelnen Stellen am Formwerkzeug anliegt. Das Halbzeug selbst bedeckt dabei zunehmend und spannungsfrei das Formwerkzeug. Anschließend erfolgt die Ausformung des Halbzeugs an der Kontur des Formwerkzeugs, wobei Vakuumkräfte und/oder Gasdruck zur Unterstützung des Ausformvorgangs dienen. Nach Abschluß des Formvorgangs wird dann das Formteil abgekühlt und von dem Formwerkzeug abgenommen.

Bei der Verwendung dieses Klapprahmens kann auf die Linearbewegung des Förderbandes verzichtet werden. Nachdem bei der Klapprahmen-Version das Halbzeug in etwa um das Formwerkzeug gefaltet wird, kann auch die überlagerte Hub- und/oder Schwenkbewegung des Formwerkzeugs verringert oder ganz eingestellt werden. Die Verwendung des Klapprahmens zur Durchführung des erfindungsgemäßen Verfahrens stellt damit eine Vereinfachung des Herstellungsprozesses dar.

Es hat sich als vorteilhaft erwiesen, daß das Halbzeug kontinuierlich durch eine mitlaufende Heizung und auch während des Fördervorgangs über das Formwerkzeug und/oder auch während des Auflegens auf das Formwerkzeug in dem temperaturerweichten Zustand gehalten wird.

Nach dem Zurückfahren des Förderelementes und dem erfindungsgemäßen Herstellen des Formteils wird das Formteil auf dem Formwerkzeug abgekühlt, von einer dreidimensionalen Oberform übergriffen und abgenommen.

Die erfindungsgemäße Vorrichtung zum Herstellen der Formteile aus thermoplastischem Werkstoff besteht aus einem Förderelement, einer Heizeinrichtung und einem Formwerkzeug zur Verformung des Halbzeugs. Das Förderelement und die Heizeinrichtung sind unter Bildung eines einstellbaren Höhenabstandes jeweils axial beweglich, wobei die axialen Bewegungen synchron oder in Gegenrichtung zur Bewegungsrichtung des Förderelements verlaufen.

Hierbei ist es erforderlich, daß die Bewegungsabläufe bis zur Fixierung des freien Halbzeugrandes am freien äußeren Rand der Form synchron verlaufen, und daß danach eine gegenläufig zur Förderrichtung verlaufende Bewegung von Förderelement und Heizung erfolgt.

Ein weiteres Merkmal der erfindungsgemäßen Vorrichtung ist es, daß das Formwerkzeug an die Bewegungsabläufe des Förderelements gekoppelt ist und gegen die Oberform schließt, sobald das Förderelement den Raum oberhalb der Form freigegeben und das Formwerkzeug mit dem Formteil den obersten Punkt des Verschiebeweges erreicht hat.

In der Zeichnung ist der Arbeitsablauf des erfindungsgemäßen Verfahrens und der Benutzung der erfindungsgemäßen Vorrichtung schematisch dargestellt; es zeigt:
Fig. 1 den Formprozess mit Bewegungsabläufen des Förderbandes und des Formwerkzeugs
Fig. 2 den Formprozess mit Klapprahmen

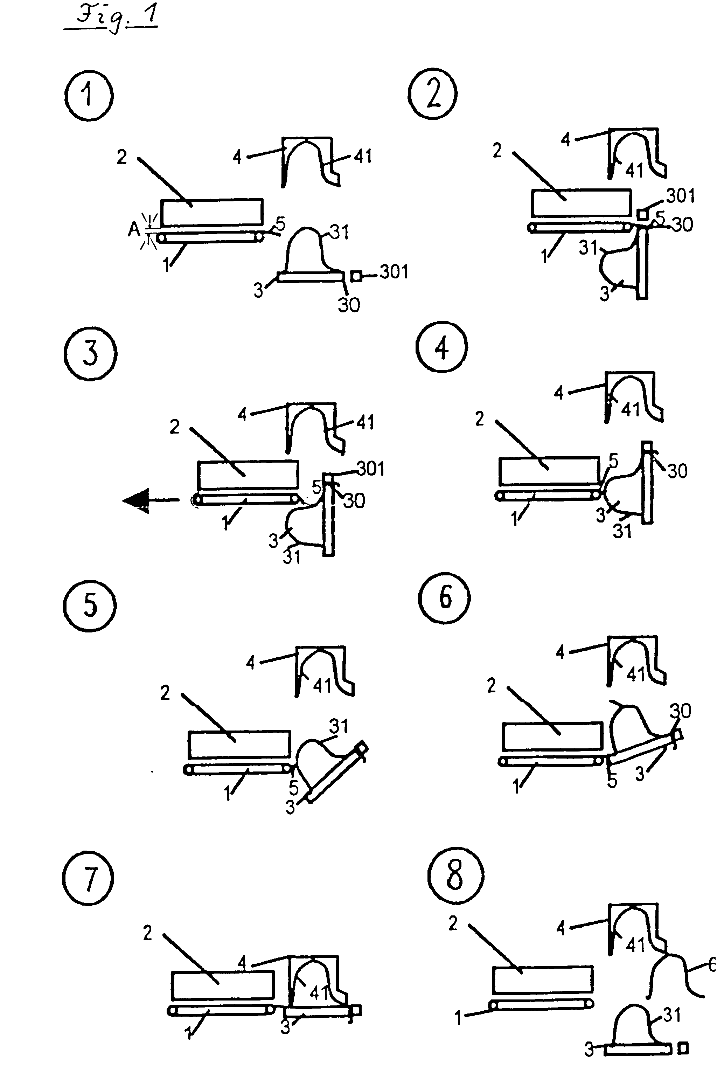

In Fig. 1 zeigt Pos. 1 das Förderelement 1 und die synchron laufende Heizeinrichtung 2. Beide Vorrichtungsteile 1, 2 bilden zueinander einen einstellbaren Höhenabstand A, der ein ungehindertes Durchlaufen der aus der nicht gezeigten Extrudereinheit extrudierten Platte oder Folie 5 erlaubt. Das Werkzeug 3 und die Einheit von Förderelement 1 und Heizeinrichtung 2 sind zueinander horizontal beweglich. Zudem ist das Werkzeug 3 gegenüber dieser horizontalen Bewegungsachse auch höhen- und schwenkbeweglich angeordnet.

Im Bereich des freien Schenkels 30 des Formwerkzeugs 3 befindet sich ein Verriegelungselement 301, welches bis zur Anlage an den freien Schenkel 30 verfahren werden kann. Oberhalb des Formwerkzeugs 3 ist die Oberform 4 angedeutet, deren Kontur 41 der Kontur 31 des Formwerkzeugs 3 entspricht.

Auf dem Förderelement 1 ist das Halbzeug 5 angedeutet, welches in der gezeigten Darstellung einen geringfügigen Überstand in Richtung auf das Formwerkzeug 3 besitzt.

In Pos. 2 ist das Formwerkzeug 3 rechtwinkelig derart unter das Förderelement 1 verschwenkt, daß der freie Schenkel 30 das überstehende Ende des Halbzeugs 5 aufnehmen kann. Das Verriegelungselement 301 ist in dieser Position noch nicht geschlossen.

Die Pos. 3 zeigt das geschlossene Verriegelungselement 301, welches in dieser Position auf den freien Schenkel 30 des Formwerkzeugs 3 aufgefahren ist und dort das freie Ende des Halbzeugs 5 festlegt. Förderelement 1 und Heizeinrichtung 2 werden nach dieser Befestigung des freien Endes des Halbzeugs 5 in Pfeilrichtung nach links verfahren und das Formwerkzeug 3 bewegt sich dabei synchron in Pfeilrichtung nach oben.

Das Förderelement 1 behält bei diesem Bewegungsvorgang die dazu gegenläufige Förderbewegung bei. Mit Hilfe dieser gegenläufigen Förderbewegung des Förderelements 1 wird das Ablegen des Halbzeugs 5 auf der Kontur 31 des Formwerkzeugs 3 unterstützt. Mit Beginn der rückläufigen Bewegung von Förderelement 1 und Heizeinrichtung 2 bei gleichzeitig gegenläufiger Förderbewegung des Förderelementes 1 beginnt gemäß Pos. 3 die Höhenverschiebung des Formwerkzeugs 3, die in Pos. 4 ihren Endzustand erreicht hat. Damit endet auch die seitliche Bewegung von Förderelement 1 und Heizeinrichtung 2, wie zu Pos. 3 beschrieben. Mit diesem Bewegungsablauf ist das Formwerkzeug 3 der Ablegebewegung des Halbzeugs 5 entgegengekommen. Das im temperaturerweichten Zustand befindliche Halbzeug 5 hat sich dabei der Kontur im vorderen Bereich des Formwerkzeugs 3 bereits angepaßt.

In Pos. 5 ist der Beginn der Schwenkbewegung des Formwerkzeugs 3 dargestellt, der sich an den Bewegungsvorgang der Pos. 4 anschließt. Dabei wird das Halbzeug 5 zunehmend an die bisher freien Umfangsflächen der Kontur 31 des Formwerkzeugs 3 weiter angelegt. Das Förderelement 1 fördert dabei das Halbzeug 5 weiter in Richtung auf das Formwerkzeug 3.

In Pos. 6 nähert sich die Schwenkbewegung des Formwerkzeugs 3 ihrem Endpunkt und das Halbzeug 5 bedeckt nunmehr die volle Kontur 31 des Formwerkzeugs 3. Dieses Anlegen wird unterstützend durch Vakuumkräfte herbeigeführt, die aus in der Darstellung nicht gezeigten Öffnungen des Formwerkzeugs 3 auf das Halbzeug 5 einwirken. Diese Kräfte können andererseits auch durch von der Gegenseite her einwirkenden Gasdruck aufgebracht werden.

Gemäß Pos. 7 senkt sich nach dem vollständigen Abschluß des Bewegungsvorgangs des Formwerkzeugs 3 nunmehr die Oberform 4 auf das Formerkzeug 3 ab. Die Kontur 41 der Oberform 4 ist konturengleich zur Kontur 31 des Formwerkzeugs 3 gestaltet. Die Oberform 4 nimmt gemäß Pos. 8 das Formteil 6 von der Kontur 31 des Formwerkzeugs 3 und gibt dieses Formteil 6 danach zur weiteren Bearbeitung frei. Die Oberform 4 und das Formwerkzeug 3 fahren danach in die Position 1 zurück und der geschilderte Verfahrensablauf kann danach erneut einsetzen.

Das Formteil 6 kann mit diesem Verfahren mit hoher Leistung und insbesondere mit nahezu gleichmäßigen Wanddicken hergestellt werden. Dadurch verringert sich der Materialverbrauch bei der Formteilherstellung entscheidend. Ausschlaggebend für die vorteilhafte Herstellung des Formteils 6 mit dem erfindungsgemäßen Verfahren ist jedoch die geringfügige Reckung des Halbzeugs 5 durch den geschilderten Verfahrensablauf.

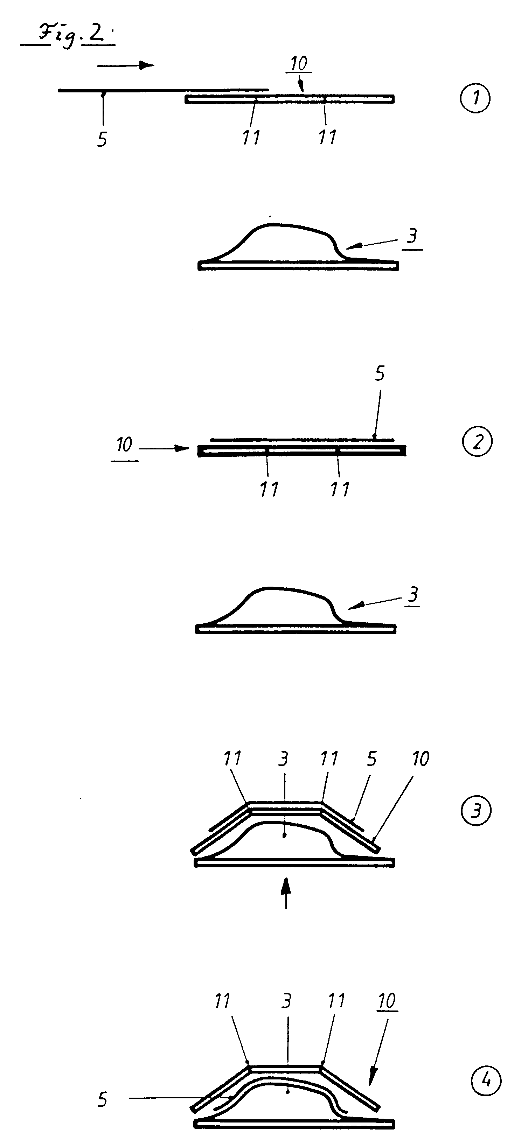

In Fig. 2 zeigt die Pos. 1 das temperaturerweichte Halbzeug 5, welches in Förderrichtung des Pfeiles auf den Klapprahmen 10 mit seinem Klappachsen 11 verfahren wird. Unterhalb des Klapprahmens 10 ist das Werkzeug 3 in Warteposition geparkt. Die Anzahl der Klappachsen 11 kann im Bedarfsfall beliebig erhöht werden.

Pos. 2 zeigt das Halbzeug 5 auf dem Klapprahmen 10 mit seinen Klappachsen 11, wobei das Werkzeug 3 weiterhin in Wartestellung unterhalb dieser Kombination verharrt.

In Pos. 3 ist das Werkzeug 3 mit einer in Pfeilrichtung verlaufenden Hubbewegung gegen den Klapprahmen 10 gefahren, der entsprechend der Werkzeugkontur in seinen Klappachsen 11 abgeklappt ist und das temperaturerweichte Halbzeug 5 an den Klappachsen 11 im Verlauf der Abwinkelung vorverformt.

In Pos. 4 ist das temperaturerweichte Halbzeug zur Endausformung auf die Kontur des Formwerkzeugs 3 abgelegt worden. Der Klapprahmen 10 mit seinen Klappachsen 11 wird danach wieder in die Ausgangsposition 1 zurückverfahren und dient zur Aufnahme eines neuen Halbzeugstreifens. Das temperaturerweichte Halbzeug 5 wird an die Oberflächenkontur des Formwerkzeugs 3 durch Vakuumangriff von innen oder Gasdruck von außen konturengleich angepaßt. Danach wird das Halbzeug 5 wie zu Fig. 1 beschrieben, vom Formwerkzeug 3 abgenommen und der weiteren Bearbeitung zugeführt.

Der Einsatz des erfindungsgemäßen Klapprahmens mit seinen Klappachsen ermöglicht eine einfache und kostengünstige Herstellung von dreidimensionalen Formteilen mit annähernd gleicher Wanddicke, bezogen auf das gesamte Formteil. Diese Formteilherstellung erfolgt bei der geschilderten Variante ohne aufwendige Maschinentechnik zur Verschwenkung und Achsverschiebung von Werkzeugteilen.

## Patentansprüche

1. Verfahren zur Herstellung von Formteilen (6) aus thermoplastischen Platten oder Folien, wobei die Platten oder Folien aufgeheizt werden, wobei das Aufheizen der Platten oder Folien während des Transportes zum Formwerkzeug (3) erfolgt und durch das Formwerkzeug (3) die temperaturerweichten Platten oder Folien (5) verformt werden, gekennzeichnet durch die nachfolgenden Verfahrensschritte:
- die temperaturerweichte Platte oder Folie (5) wird über ein Förderelement (1) in planer Erstreckung über ein höhenverstellbares und/oder schwenkbares Formwerkzeug (3) gefördert;
- danach wird ein über das Förderelement 1 hinausragendes freies Ende der temperaturerweichten Platte oder Folie (5) durch ein Verriegelungselement (301) auf dem freien Schenkel (30) des Formwerkzeuges (3) fixiert;
- die temperaturerweichte und so fixierte Platte oder Folie (5) wird dann von dem Förderelement (1) unter Beibehaltung der Förderbewegung bei kontinuierlich zurückfahrendem Förderelement (1) abgegeben und auf dem Formwerkzeug (3) abgelegt;
- das Formwerkzeug (3) wird synchron dazu in einer überlagerten Hub- und Schwenkbewegung so bewegt, daß die temperaturerweichte Platte oder Folie (5) bis zur Kontur (31) des Formwerkzeuges (3) geführt wird;
- die temperaturerweichte Platte oder Folie (5) bedeckt dadurch zunehmend und spannungsarm die Kontur (31) des Formwerkzeuges (3);
- das Anlegen wird über Vakuum und/oder Gasdruckkräfte unterstützt, die aus Öffnungen des Formwerkzeuges (3) auf die temperaturerweichte Platte oder Folie (5) einwirken,
- nach Abschluß des Formvorganges wird das Formteil (6) abgekühlt und von dem Formwerkzeug (3) abgenommen.

2. Verfahren nach Anspruch 1, dadurch gekennzeichnet, daß die Platte oder Folie (5) kontinuierlich auf das Förderelement (1) aufgebracht und durch eine mitlaufende Heizeinrichtung (2) auch noch während des Fördervorganges über das Formwerkzeug (3) und/oder auch während des Auflegens auf das Formwerkzeug (3), in dem temperaturerweichten Zustand gehalten wird.

3. Verfahren nach Anspruch 1, dadurch gekennzeichnet, daß das abgekühlte Formteil (6) auf dem Formwerkzeug (3) von einer dreidimensionalen Oberform (4) übergriffen und abgenommen wird.

## Claims

1. A process for producing mouldings (6) out of thermoplastic sheets or film, wherein: said sheets or films are heated; the heating of said sheets or films occurs during their transport to the mould (3) and said mould shapes the thermally softened sheets or films (5); and said process is characterized by the following process steps:
- A conveyor element (1) conveys the thermally softened sheet or film (5) in planar extension over a vertically adjustable and/or pivotable mould (3);
- Subsequently, a locking element (301) locks a free end of the thermally softened sheet or film (5) extending beyond the conveyor element (1) in place on the free side (30) of the mould (3);
- Subsequently, the conveyor element (1), while retaining the conveyor movement during continuous retraction of the conveyor element (1), delivers the thermally softened sheet or film (5) thus locked in place and deposits said sheet or film on the mould (3);
- Meanwhile, the mould (3) is displaced in a superimposed lifting and pivoting motion, so that the thermally softened sheet or film (5) is guided to the contour (31) of the mould (3);
- The thermally softened sheet or film (5) thereby increasingly covers the contour (31) of the mould (3) while remaining under low tension;
- A vacuum and/or compressed gas acts on the thermally softened sheet or film (5) through openings in the mould (5) to help position said thermally softened sheet or film;
- After completion of the moulding operation, the moulding (6) is cooled and removed from the mould (3).

2. A process according to Claim 1, characterized in that the sheet or film (5) is continuously placed on the conveyor element (1) and maintained in a thermally softened state by means of a heating device (2) that travels with said sheet or film (5) during the conveyor process over the mould (3) and/or during placement of said sheet or film (5) on the mould (3).

3. A process according to Claim 1, characterized in that a three-dimensional upper mould (4) grips the cooled moulding (6) and removes said piece from the mould (3).

## Revendications

1. Procédé pour fabriquer des pièces de forme (6) à partir de plaques ou de feuillards thermoplastiques, lesquels sont chauffés pendant leur transport vers le moule (3) et déformés sous l'effet de la température produite par le moule (3), caractérisé par les étapes suivantes :
- la plaque ou le feuillard ramolli sous l'effet de la température est transporté, étendu à plat, par un élément de transport (1) via un moule réglable en hauteur et/ou pivotant.
- l'extrémité libre de la plaque ou du feuillard (5) ramolli par la température et dépassant de l'élément de transport (1) est fixée par un élément de verrouillage (301) sur le côté libre (30) du moule (3)
- la plaque ou le feuillard (5) ramolli par la température et ainsi fixé, est guidé et déposé sur le moule (3) par l'élément de transport (1) en continuant à avancer lorsque l'élément de transport (1) recule
- le moule (3) décrit de façon synchrone un mouvement de levage et d'oscillation de façon à ce que la plaque ou le feuillard (5) ramolli par la température soit guidé jusqu'au contour (31) du moule (3).
- la plaque ou le feuillard (5) ramolli par la température recouvre de plus en plus le contour (31) du moule (3).
- l'application se fait sous vide et/ou sous pression du gaz, qui en s'échappant des orifices du moule (3) agit sur la plaque ou le feuillard ramolli (5)
- lorsque le processus de formage est terminé, la pièce obtenue (6) est refroidie et retirée du moule (3).

2. Procédé selon la revendication 1, caractérisé en ce que, le panneau ou le feuillard (5) est déposé de façon continue sur l'élément de transport (1 ) et maintenu à la température de ramollissement voulue par un dispositif de chauffage (2) accompagnant le panneau ou le feuillard pendant le transport vers le moule (3) et/ou également pendant la dépose sur le moule (3).

3. Procédé selon la revendication 1, caractérisé en ce que la pièce refroidie (6) est saisie sur le moule (3) par une forme tridimensionnelle (4) puis déposée.
